# EUROPEAN PATENT SPECIFICATION

(11) **EP 2 269 814 B1**
(45) Date of publication and mention of the grant of the patent: **26.02.2014**
(21) Application number: 10005662.1
(22) Date of filing: 01.06.2010
(51) Int. Cl.: B32B 5/02, B32B 21/10, B44C 1/00, B44C 5/04

(54) **Printing of non-woven fabrics and their use in composite materials**
Bedrucken von Vliesstoffen und deren Verwendung in Verbundstoffen
Impression de tissus non tissés et leur utilisation dans les matériaux composites

(30) Priority: 03.06.2009 DE 102009023737; 08.10.2009 DE 102009048718
(43) Date of publication of application: 05.01.2011
(73) Proprietor: Johns Manville Europe GmbH, 86399 Bobingen (DE)
(72) Inventor: Ketzer, Michael, 97903 Collenberg (DE); Gleich, Klaus Friedrich, 80126 Highland Ranch (US)
(74) Representative: Mai, Dörr, Besier

(56) References cited:
- EP-A1- 1 595 718
- WO-A2-2008/101679
- DE-A1- 19 525 494
- US-A1- 2005 136 254

## Description

The invention relates to printing of directly decoratable or printable non-woven fabrics and their use in composite materials, suitable in particular as materials in interior finishing, for linings, constructions and for the manufacture of furniture and similar products.

Composite materials are increasingly replacing traditional building materials as construction materials and must be adapted for manifold applications. Thus, on the one hand a sufficient mechanical stability is required and on the other hand a good processability and low weight are necessary. There has therefore been no lack of attempts to improve existing composite materials.

Thus, the combining of wood materials, which are manufactured from comminuted wood and the use of binders, with further materials is already known. To this end, the two materials are usually laminated and form a composite material. The selection and combination of the materials can improve the mechanical properties and at the same time a reduction, e.g. of the weight, can be achieved.

During processing, the previously described composite materials are often subjected to further finishing steps, e.g., a lacquering or printing. This places high demands regarding smoothness and tolerances on the surfaces to be worked so that the surfaces to be worked must be pre-worked in an elaborate manner and often several times in order that a later finish is possible at all.

Composite materials based on wood-based materials and non-woven fabrics consolidated by a "B-stage" binder are known from W02006/031522. The base non-woven fabrics are known, e.g., from US-A-5,837,620, US-A-6,303,207 and US-A-6,331,339.

Although it is known from W02006/031522 that further additives can be added to the binder or the non-woven fabric, more detailed data about the later usage or the processing however are not given.

Decorative panels made of wood-based materials are usually provided, pressed together or bonded with decor paper or decor paper films. The decor is also produced by means of print rollers or else digital printing methods on specially prepared panels made of wood-based materials.

This is a complex and expensive procedure. However, the impact properties and fire retardancy are low when using paper. By laminating glass non-woven fabrics on top, these properties, in particular the impact behavior, MOR properties and fire retardancy can be improved significantly.

It is known from W02008/101679 to provide laminates, the surface of which is provides with glass non-woven fabrics, with a decor by means of direct printing. The direct printing takes place on the smooth surface of the laminate after it was pressed together with the glass non-woven fabric. By using glass non-woven fabrics, additional to the improvement of the impact behavior, strength and fire behavior, the decor can also be produced on the laminate by means of direct printing.

Today's demands on production speed, manufacture efficiency and improved product properties can hardly be achieved with previous methods.

Thus, the object was to find composite materials with a decor which could be produced quickly and efficiently and display the impact properties, strength values and fire properties which are comparable with laminates containing glass non-woven fabrics for reinforcement. The manufacture should be possible by means of suitable manufacturing methods on an industrial scale.

Furthermore, there is thus the task of finding composite materials with the previously cited properties that can be produced with known working processes and systems, if possible.

It was now found that such laminates with a decor can be produced by providing the textile surface structure produced according to the invention with a decor by means of printing and subsequently laminating it onto the carrier.

The invention is based on the surprising result that non-woven fabrics, in particular glass non-woven fabrics containing binders and/or "B-stage" binder systems can be printed. The thus produced non-woven fabric is then pressed together with the carrier materials under pressure and temperature. In the case of cured standard binder systems, the pressing takes place with two overlay papers or overlay non-woven fabrics which comprise a B-stage binder and are pressed onto the carrier. In this connection, the decorative non-woven fabric is in the middle of both overlay systems. When using printed non-woven fabrics with "B-stage" binders, the decor non-woven fabric may preferably be pressed directly onto the carrier.

Therefore, the object of the present invention is a semi-finished product or pre-product for the manufacture of a composite material comprising:
a) a carrier,
b) at least one textile surface structure arranged on at least one of the two sides of the carrier, the textile surface structure comprising at least one binder in the B-stage and optionally being provided with a functional material,
c) the textile surface structure in accordance with b) being printed on the side facing away from the carrier with a decor, preferably by means of digital printing.

The semi-finished product or pre-product according to the invention may be converted into a composite material by means of laminating, the present binder in the B-stage state being consolidated.

Therefore, another object of the present invention is a composite material comprising:
(i) a carrier,
(ii) at least one textile surface structure laminated onto at least one of the two sides of the carrier, the textile surface structure comprising at least one consolidated B-stage binder and optionally being provided with a functional material,
   **characterized in that** the textile surface structure has been printed prior to laminating with a decor, preferably by means of digital printing.

Another object of the invention is the textile surface structure which comprises at least one binder in the B-stage and is printed with a decor, preferably by means of digital printing.

Furthermore, it was also found that printed, in particular digitally printed non-woven fabrics, in particular glass non-woven fabrics can be used for the production of CPLs (Continuous Pressure Laminates) or HPLs (High Pressure Laminates).

It is known that composite materials can be printed and/or lacquered but the surface to be worked must first be prepared by suitable measures. Usually, the surfaces are smoothed for this by abrasive measures, e.g., grinding.

A further preparatory measure in the printing or lacquering of composite materials is to provide the surface to be worked with so-called primer layers. Suitable primer materials are known in the prior art, usually, these are water-soluble fillers. In as far as the surfaces to be worked have a low surface quality, relatively thick primer layers or several primer layers are necessary. It was only possible to print and/or lacquer the surface by these measures (grinding and/or primer coating). It was completely surprising for the person skilled in the art that the present invention manages to do without pre-working the surface to be printed by means of abrasive measures and/or primer.

Another possibility to produce decorative material plates, in particular wood-based materials is the use of decor papers or decor paper films which are applied to the carrier. Although these papers are inexpensive, they do not contribute to the stability of the composite material and to the improvement of the fire properties.

Another possibility to produce decorative material plates is the use of decorative laminate plates, e.g. so-called CPLs and HPLs. To this end, the decorative laminate plates, which are pressed together continuously or in multi-daylight presses using decor papers or decor paper films with kraft paper films as core layers, are finally applied to the carrier. Although these papers are inexpensive, they do not contribute to the stability of the composite material and to the improvement of the fire properties.

The carrier used according to the invention preferably consists in wood-based materials, papers, cork, cardboards, mineral plates, plastic carriers, fiber-reinforced materials and/or so-called honeycombs. Honeycombs are structural components with three-dimensional reinforcement structures that make possible an extraordinary stability and strength with low weight at the same time on account of their construction (bee honeycomb structure). Such honeycombs have been used for some time in many areas of application, among others also as inner reinforcement of plate-shaped elements in the construction area or in furniture.

The wood-based materials are plate-shaped or strand-shaped wood-based materials manufactured by mixing the different wood particle forms with natural and/or synthetic binding agents during a hot pressing. The wood-based materials used according to the invention preferably comprise plywood or laminated wood, wood-chip material, especially chipboards and OSBs (Oriented Strand Boards), wood fiber material, especially porous wood fiber boards, open-diffusion wood fiber boards, hard (high-density) wood fiber boards (HDFs) and medium-density wood fiber boards (MDFs), and Arboform. Arboform is a thermoplastically processable material of lignin and other wood components.

Moreover, the carriers according to the invention comprise materials of wood fiber materials, cellulose fibers, natural fibers or their mixtures and of a thermoplastic binder, the proportion of the binder being more than 15% by weight. The materials are optionally reinforced by glass fibers, basalt fibers or synthetic fibers.

The papers are preferably papers on the basis of natural, synthetic, mineral or ceramic fibers or also of mixtures of these fiber types.

The cardboards are preferably cardboards on the basis of natural and/or synthetic fibers which also comprise mineral and/or ceramic fibers as well as mixtures of these fiber types.

The mineral plates are preferably commercial mineral cardboard plates with cardboard coating on both sides, gypsum fiber plates, ceramic fiber plates, cement plates or lime plates. The plates can optionally be reinforced with natural and/or synthetic fibers which can also comprise mineral and/or ceramic fibers. The reinforcement fibers can be present in the form of filaments, monofilaments or as staple fibers.

The plastic plates are preferably customary elements which provide manifold fields of application in furniture production or in the course of interior decoration. Besides the plastic plates, fiber-reinforced materials are also used for such applications.

In addition to the described materials, the carrier can also consist of cork or other plant materials.

The weight per unit area of the carriers contained in the composite material is a function of the final application and is not subject to any particular limitation.

The textile surface structures used according to the invention are all structures manufactured from fibers and from which a textile surface was produced by means of a surface-forming technology.

The textile surface structures can be provided with a standard binder and/or a B-stage binder.

The textile surface structures to be provided with the B-stage binder can generally also be used without additional binders, in particular chemical binders.

A standard binder can particularly be omitted in the case of non-woven fabrics which contain thermoplastic fibers and may be calendered or needled.

However, in order to ensure the required strengths in the further processing of the surface structures, binders can also be introduced and/or known needling methods can be used. In addition to the possibility of a mechanical strengthening, e.g., by calendering or needling, in particular the hydrodynamic needling is also mentioned here. Chemical and/or thermoplastic binders are suitable as binders.

However, the textile surface structures to be provided with the B-stage binder are preferably pre-strengthened with a chemical binder. The binders used can be the same or different but must be selected from the group of the binder systems compatible with the B-stage binder. The additional binder content (chemical binders) is at most 30% by weight, preferably 7 to 27% by weight.

The fiber-forming materials are preferably natural fibers and/or fibers of synthesized or natural polymers, ceramic fibers, mineral fibers or glass fibers that can also be used in the form of mixtures. Textile surfaces are considered to be fabrics, layings, knitted fabrics, knitwear and non-woven fabrics, preferably non-woven fabrics.

The textile surfaces of mineral and ceramic fibers are aluminosilicate fibers, ceramic fibers, dolomite fibers, wollastonite fibers or fibers of vulcanites, preferably basalt fibers, diabase fibers and/or melaphyre fibers, especially basalt fibers. Diabases and melaphyres are designated collectively as paleobasalts and diabase is also often designated as greenstone.

The non-woven fabric made of mineral fibers can be formed from filaments, that is, infinitely long fibers or of staple fibers. The average length of the staple fibers in the non-woven fabric of mineral fibers used according to the invention is between 5 and 120 mm, preferably 10 to 90 mm. In a further embodiment of the invention, the non-woven fabric made of mineral fibers contains a mixture of endless fibers and staple fibers.

The average fiber diameter of the mineral fibers is between 5 and 30 µm, preferably between 8 and 24 µm, especially preferably between 8 and 15 µm.

The weight per unit area of the textile surface structure of mineral fibers is between 15 and 500 g/m², preferably 40 and 250 g/m², wherein these data refer to a surface structure without binders.

In the case of the textile surfaces of glass fibers, non-woven fabrics are particularly preferred. These are constructed from filaments, that is, infinitely long fibers or of staple fibers. The average length of the staple fibers is between 5 and 120 mm, preferably 10 to 90 mm. In a further embodiment of the invention, the non-woven fabric made of glass fibers contains a mixture of endless fibers and staple fibers. The average diameter of the glass fibers is between 5 and 30 µm, preferably between 8 and 24 µm, especially preferably between 10 and 21 µm.

In addition to the previously cited diameters, so-called glass microfibers can also be used. The preferred average diameter of the glass microfibers is between 0.1 and 5 µm. The microfibers forming the textile surface can also be present in mixtures with other fibers, preferably glass fibers. Moreover, a layer-shaped structure of microfibers and glass fibers is also possible.

The weight per unit area of the textile surface structure of glass fibers is between 15 and 500 g/m², preferably 40 and 250 g/m², wherein these data refer to a surface structure without binders.

Suitable glass fibers comprise in particular those manufactured from A-glass, E-glass, S-glass, C-glass, T-glass or R-glass.

The textile surface can be manufactured according to any known method. For glass non-woven fabrics, this is preferably the dry or wet laying method.

Among the textile surfaces of fibers of synthetic polymers, non-woven fabrics, especially so-called spun bonds, that is spunbonded non-woven fabrics produced by a tangled deposit of melt-spun filaments, are preferred. They consist of continuous synthetic fibers composed of melt-spinnable polymer materials. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether and keto groups such as, e.g., polyetherketones (PEK) and polyetheretherketone (PEEK), polyolefins such as, e.g., polyethylene or polypropylene, cellulose or polybenzimidazoles. In addition to the previously cited synthetic polymers, even those polymers are suited that are spun from solution.

Preferably, the spunbonded non-woven fabrics consist of melt-spinnable polyesters. The polyester material can, in principle, be any known type suitable for the fiber production. Polyesters containing at least 95 mol % of polyethylene terephthalate (PET) are particularly preferred, especially those composed of unmodified PET.

If the composite materials according to the invention should additionally have a flame-retardant action, it is advantageous if they were spun from polyesters modified in a flame-retardant manner. Such flame-retardantly modified polyesters are known. Apart from these, other flame-retardantly modified polymer materials, such as, e.g., polyamide, can also be used.

The single titers of the polyester filaments in the spunbonded non-woven fabric are between 1 and 16 dtex, preferably 2 to 10 dtex.

In a further embodiment of the invention, the spunbonded non-woven fabric can also be a bonded fiber fabric consolidated by a hot-melt binder and containing carrier fibers and hot-melt fibers. The carrier fibers and hot-melt fibers can be derived from any thermoplastic, fiber-forming polymers. Such spunbonded non-woven fabrics consolidated by a hot-melt binder are described, for example, in EP-A-0,446,822 and EP-A-0,590,629.

In addition to endless filaments (spunbond method), the textile surface can also be constructed of staple fibers or mixtures of staple fibers and endless filaments. The single titers of the staple fibers in the non-woven fabric are between 1 and 16 dtex, preferably 2 to 10 dtex. The staple length is 1 to 100 mm, preferably 2 to 500 mm, particularly preferably 2 to 30 mm. The textile surface structure can also be constructed of fibers of different materials in order to be able to achieve special properties.

The filaments and/or staple fibers forming the non-woven fabrics can have a practically round cross-section or also other forms such as dumbbell-shaped, kidney-shaped, triangular or tri-lobed or multi-lobed cross-sections. Hollow fibers and bi-component or multi-component fibers may also be used. Furthermore, the hot-melt fibers can also be used in the form of bi-component or multi-component fibers.

The fibers forming the textile surface structure can be modified by customary additives, e.g., by antistatic agents such as carbon black.

The weight per unit area of the textile surface structure of fibers of synthetic polymers is between 10 and 500 g/m², preferably 20 and 250 g/m².

The natural fibers are plant fibers, fibers derived from grasses, straw, wood, bamboo, reed and bast, or fibers of animal origin. Plant fibers is a collective term and represents seed fibers, such as
cotton, kapok or poplar fluff, bast fibers, such as bamboo fiber, hemp, jute, linen or ramie, hart fibers, such as sisal or manila, or fruit fibers, such as coconut. Fibers of animal origin are wool, animal hairs, feathers and silks.

The weight per unit area of the textile surface structure of natural fibers is between 20 and 500 g/m², preferably 40 and 250 g/m².

The textile surfaces of fibers of natural polymers are cellulose fibers, such as viscose, or vegetable or animal protein fibers.

Among the textile surfaces of cellulose fibers, non-woven fabrics are especially preferred. These are constructed from filaments, that is, infinitely long fibers and/or from staple fibers. The average length of the staple fibers is between 1 and 25 mm, preferably 2 to 5 mm.

The average diameter of the cellulose fibers is between 5 and 50 µm, preferably between 15 and 30 µm.

In as far as the composite material according to the invention is to be finished by powder lacquering or electrostatically, the composite material to be worked should have a sufficient electrical conductivity. It can be advantageous for this if, in order to elevate the electrical conductivity, the carrier used according to the invention already contains pigments or particles that bring about such an elevation.

The previously described conductivity can also be present as a functional material in the textile surface structure equipped with B-stage binder. For this, these functional materials can be mixed and applied with the B-stage binder or the textile surface structure equipped with the B-stage binder is provided with the functional material. The previously cited materials are usually metallic particles, carbon black or conductive organic resins, such as phenol resins, or inorganic or organic salts. Such additives are already known from DE-A-3639816. Furthermore, the salts disclosed in DE-A-10232874 and EP-A-1659146, especially alkali or alkaline earth salts, such as lithium nitrate and sodium nitrate, can also be used. However, the previously cited materials should be compatible with the other materials.

The textile surface structure used according to the invention, which is applied to at least one side of the carrier, includes at least one binder in the B-stage state.

B-stage binders are understood to mean binders that are only partially consolidated or hardened and can still experience a final consolidation, e.g., by thermal posttreatment. Such B-stage binders are described in detail in US-A-5,837,620, US-A-6,303,207 and US-A-6,331,339. The B-stage binders disclosed therein are also an object of the present invention. B-stage binders are preferably binders based on furfuryl alcohol formaldehyde, phenol formaldehyde, melamine formaldehyde, urea formaldehyde and their mixtures. Preferably, these are aqueous systems. Further preferred binder systems are formaldehyde-free binders. B-stage binders are **characterized in that** they can be subjected to a multistage hardening, that is, they still have a sufficient binding action after the first hardening or after the first hardenings so that they can be used for the further processing. Such binders are usually hardened in one step after the addition of a catalyst at temperatures of ca. 350 °F.

In order to form the B-stage, such binders are optionally hardened after the addition of a catalyst. The amount of hardening catalyst is up to 10% by weight, preferably 0.1 to 5% by weight (based on the total binder content). For example, ammonium nitrate as well as organic aromatic acids, e.g., maleic acid and p-toluenesulfonic acid, are suitable as hardening catalyst since it allows the B-stage state to be reached quicker. In addition to ammonium nitrate, maleic acid and p-toluenesulfonic acid, all materials are suitable as hardening catalyst that have a comparable acidic function. In order to reach the B-stage, the textile surface structure impregnated with the binder is dried under the influence of temperature without producing a complete hardening. The necessary process parameters are dependent on the binder system selected.

The lower temperature limit can be influenced by the selection of the duration or by adding more or stronger acidic hardening catalysts.

The application of the B-stage binder to the textile surface structure can take place by means of all known methods. In addition to spraying, impregnating and pressing, the binder can also be applied by coating or by means of rotary nozzle heads.

In the foam application, a binder foam is produced by means of a foaming agent in a foam mixer, the binder foam being applied to the non-woven fabric by suitable coating aggregates. Here, the application can also take place by means of rotary nozzle heads.

In the foam coating of a B-stage-capable binder, there are basically no limitations with regard to the foaming agent. Preferred foaming agents are ammonium stearates or succinic acid esters added with 1% - 5% by dry weight to the binder. Furthermore, the already described catalysts are admixed, if required. The solids content of the foam is at least 40%, preferably at least 50%.

The process of foam application allows for an extremely flexible process control and permits the realization of a plurality of different product properties. In addition to the targeted adjustment of the penetration depth of the foam into the textile surface, the binder charge and porosity can vary within wide limits. In addition, the foam application offers great advantages in the process control, especially regarding the constancy of the solids content during the impregnating or coating of the textile surface and the required compatibility requirements of the surface manufacturing process on the binder.

The functional material optionally used according to the invention can be applied at the same time with the B-stage binder, e.g., as a mixture or as an individual component, or before or after the application of the binder. In as far as the B-stage binder is applied by foam application, it is advantageous to apply the functional material with the foam or distributed in the foam or to apply the functional material onto the still fresh foam.

In addition to the previously cited features, the composite material according to the invention can include even further finishings with a functional material. To this end, a functional material applied to the top of the textile surface structure equipped with the B-stage binder or introduced into the textile surface structure is used.

The functional material used according to the invention preferably comprises flame retardants, materials for controlling electrostatic charges, organic or inorganic pigments, especially colored pigments, electrically conductive pigments or particles.

In a variant of the method, an additional binder is added to fix the functional materials on the textile surface structure. In this connection, the same binder (B-stage binder) as is present in the textile surface structure is preferably chosen. The content of functional materials is determined by the subsequent use.

The flame retardants are inorganic flame retardants, organophosphorus flame retardants, nitrogen-based flame retardants or intumescence flame retardants. Halogenated (brominated and chlorinated) flame retardants can also be used but are less preferred on account of their risk evaluation. Examples for such halogenated flame retardants are polybrominated diphenyl ethers, e.g., decaBDE, tetrabromobisphenol A and HBCD (hexabromocyclododecane).

Antistatic effects can be achieved and/or the properties for the powder lacquering can be adjusted by the use of agents for raising or controlling the electrical conductivity. These agents are customarily particles that are electrically conductive. Suitable materials are electrically conductive carbons, such as carbon black, graphite and carbon nanotubes (C nanotubes), conductive plastics or fibers or particles of metal or metallic components. In addition to these, conductive organic resins, such as phenol resins, or inorganic or organic salts can also be used. Such additives are already known from DE-A-3639816. Furthermore, the salts disclosed in DE-A-1 0232874 and EP-A-1659146, especially alkali or alkaline earth salts, such as lithium nitrate and sodium nitrate, can also be used. However, the previously cited materials should be compatible with the other materials.

The use of agents for raising and/or controlling the electrical conductivity reduces the surface resistance of the composite material according to the invention. It turned out that composite materials according to the invention with a surface resistance of up to 10¹⁰ Ω (ohms), preferably up to 10⁸ Ω (ohms) are very well suited for powder lacquerings.

To increase the abrasiveness and scratch resistance, SiC and/or SiO₂ particles or similar materials are preferably used. For the surface finish to improve the abrasion and hardness, grain sizes of less than 1 mm are typically used by which a very hard surface can be produced.

In a further embodiment, the textile surface structure according to the invention can have even further additional layers and auxiliary layers that should facilitate or support direct printing, in particular by means of digital direct printing. These additional layers and auxiliary layers are for example acrylate dispersions which lead to stable bonds of the printing ink and the binder system before the printing, e.g. applied with a doctor blade.

The textile surface structure used according to the invention, which is applied to at least one side of the carrier, includes at least one binder in the B-stage state and is printed with a decor which preferably was produced by means of digital printing.

Through this, the production of composite materials or their semi-finished products and pre-products is simplified significantly. By using textile surface structures which comprise at least one binder in the B-stage state and are printed with a decor, the printing of the consolidated textile surface at a later stage is dispensed with. As this is usually already laminated with a carrier at this point in time, this elaborate process step is avoided. During the consolidation of the B-stage binder, i.e. during the hardening of the B-stage binder, blending decors can be produced in particular which are very appealing.

Another advantage that can be realized by using the textile surface structures according to the invention is to print wood decors, such as, e.g., wood grains or wood pores, directly. Owing to the very high dimensional stability of the textile surface structure according to the invention, it is then possible to apply 3-dimensional structures, such as, e.g., wood grains or wood pores, to the surface with extremely high register accuracy by pressing them into the surface by means of structured sheet metals.

The composite materials according to the invention or the semi-finished products and pre-products according to the invention contain a textile surface structure which is printed with a decor or pattern. The printing may take place by means of customary printing methods known to the person skilled in the art. The term decor or pattern is also supposed to mean a coating with printing media covering the entire surface.

The printing methods employed according to the invention are not subject to any limitation, however, have to be compatible with the textile surface structure and the binder in the B-stage state present therein. Suitable printing methods are - besides the digital printing - flat printing, letterpress printing, intaglio printing, screen printing and porous printing. The above-mentioned methods are described in more detail in DIN 16500.

In letterpress printing, the image points of the printing plate are higher than the non-image points, e.g. letterpress and flexographic printing. In flat printing, the image points and non-image points of the printing plate are approximately on one level, e.g. offset printing. In intaglio printing, the image points of the printing plate are lower than the non-image points. In porous printing, the image points of the printing plate consist in one template, e.g. an ink-permeable template carrier, a screen made of plastic or metal threads. The non-image points are ink-impermeable in porous printing. Examples for porous printing are screen printing and risography.

In particular so-called non-impact printing (NIP) methods are suited as digital printing methods. Especially color thermoprintings or color heat-transfer printing, thermosublimation printing, inkjet printing and laser printing are to be understood to be included in this term.

Another object of the present invention is a method for manufacturing the composite material according to the invention comprising the measures:
a) supplying a carrier,
b) applying a textile surface structure to at least one surface of the carrier, the textile surface structure comprising a binder in the B-stage state and being printed with a decor, in particular with a decor produced via a digital printing method, and the textile surface structure optionally comprising at least one functional material,
c) laminating the structure obtained according to step c) under the action of pressure and heat so that the binder present in the B-stage is consolidated,
d) optionally applying a protective layer.

The textile surface structure employed according to the invention and comprising a binder in the B-stage state is printed with a decor by means of customary printing methods, in particular by means of digital printing methods. In this connection, it is essential to the invention that the printing of the textile surface structure takes place at a point in time at which the B-stage binder is still present in the B-stage state.

It was completely surprising for the person skilled in the art that such a textile surface can be directly printed. The manufacture of composite materials having a decor can be simplified significantly by means of this method.

The printing, in particular the digital printing of the textile surface may take place directly on the textile surface or else also on the textile surface provided with B-stage binder. It is thus possible to initially apply the B-stage binder to the textile surface structure and subsequently apply a decor by means of customary printing methods, preferably by means of digital printing methods, or else initially apply the decor by means of digital printing methods and thereafter the B-stage binder. The print product obtained in this way is comparable with all known paper qualities or markedly better with regard to the printing quality.

The laminating of the structure obtained in accordance with step b) in step c) takes place under the action of pressure and heat in such a manner that the binder present in the B stage is consolidated.

The lamination can take place by discontinuous or continuous pressing or by rolling. The parameters pressure, temperature and dwell time are selected in accordance with the B-stage binder system used. On account of the surface quality, the surface of the presses or rollers should be selected in such a manner that the tolerances can be maintained.

In a variant, the application of a textile surface structure in accordance with step b) can also take place during the manufacture of the carrier. In other words, instead of the finished carrier in step a), the carrier is only formed in step b).

The pressing of the formed carrier takes place together with the equipped textile surface structure, the textile surface structure being correspondingly introduced into the pressing and/or drying apparatus for the carrier. The manufacture of the composite of carrier and non-woven fabric can take place continuously or discontinuously.

In a variant, the textile surface structure applied in accordance with step b) can already have a finishing with functional material.

The layers applied in accordance with step d) are additional or auxiliary layers serving to provide the surface with a finish or to protect the surface.

The application of these additional layers and/or auxiliary layers in step d) and their drying takes place by known techniques.

In a variant of the method, a standard binder, e.g. melamine and urea binder, is used in the textile surface instead of the B-stage binder. In this case, the pressing takes place together with two overlay papers or overlay non-woven fabrics which comprise a B-stage binder and are pressed together onto the carrier. In this connection, the decorative textile surface is in the middle of both overlay systems.

Therefore, another object of the present invention is a method for manufacturing the composite material according to the invention comprising the measures:
a. supplying a carrier,
b. applying an overlay paper or overlay non-woven fabric to at least one surface of the carrier, the overlay paper or the overlay non-woven fabric comprising at least one binder in the B-stage state,
c. applying a textile surface structure to the overlay paper or overlay non-woven fabric, the textile surface structure being provided with a decor, preferably by means of digital printing and optionally at least one functional material being introduced,
d. applying an overlay paper or overlay non-woven fabric to the textile surface, the overlay paper or the overlay non-woven fabric comprising at least one binder in the B-stage state,
e. laminating the structure obtained in accordance with steps b) - d) under the action of pressure and heat so that the binder present in the B-stage is consolidated,
f. optionally applying a protective layer.

The laminating preferably takes place with short cycle presses (SC) or continuous presses.

In the SC method, overlay papers or overlay non-woven fabrics comprising a B-stage binder are also pressed to protect the decor surface. Instead of an overlay paper or overlay non-woven fabric in accordance with d), an acrylate or PU coating can also be applied to the surface.

The use of SC presses allows for the use of pressing plates with an engraving which additionally allows for a 3D structure on the substrate. In this connection, it is possible to introduce the engraving synchronously to the decor image. Marble structures, wood pores and grains or similar patterns can be produced, for example.

In another variant of the method, a laminate containing the decorated textile surface structure is initially produced and applied to the carrier. For the production of the laminate, methods are generally suited as are also used for the production of CPLs (Continuous Pressure Laminates) or HPLs (High Pressure Laminates). The laminate thus produced is then pressed together with the carrier by means of a suitable adhesive in a known manner.

Therefore, another object of the present invention is a method for manufacturing the composite material according to the invention comprising the measures:
a. supplying a textile surface structure, the textile surface structure having a printed decor, preferably a decor produced by means of a digital printing method and the textile surface structure comprising at least one binder in the B-stage state and optionally at least one functional material being introduced,
b. laminating the structure obtained according to step a) under the action of pressure and heat so that the binder present in the B-stage is consolidated,
c. optionally applying a protective layer,
d. supplying a carrier,
e. pressing the obtained structure, an adhesive and/or a reactive binder having been introduced between carrier and laminate.

The textile surface structure required in accordance with step a) and comprising a binder in the B-stage state is provided with a decor by means of customary printing methods, however preferably by means of a digital printing method. The printing, in particular the digital printing of the textile surface may take place directly on the textile surface or else also on the textile surface provided with B-stage binder. It is thus possible to initially apply the B-stage binder to the textile surface structure and subsequently apply a decor by means of customary printing methods, preferably by means of digital printing methods, or else initially apply the decor and thereafter the B-stage binder.

The laminating of the structure obtained in accordance with step a) in step b) takes place under the action of pressure and heat in such a manner that the binder present in the B stage is consolidated.

The lamination can take place by discontinuous or continuous pressing or by rolling. The parameters pressure, temperature and dwell time are selected in accordance with the B-stage binder system used. On account of the surface quality, the surface of the presses or rollers should be selected in such a manner that the tolerances can be maintained.

The adhesive introduced between carrier and laminate may comprise any suitable adhesive, including reactive adhesives. The application of the adhesives may take place in any suitable and known manner.

The pressing under e) usually takes place at a low temperature (max. 100°C) by means of the SC method or a continuous method.

In an alternative variant, a standard binder, e.g. melamine and urea binder, is used in the textile surface instead of the B-stage binder. In this case, the pressing takes place together with two overlay papers or overlay non-woven fabrics which comprise a B-stage binder and are pressed together with the textile surface. In this connection, the decorative textile surface is in the middle of both overlay systems.

Therefore, another object of the present invention is a method for manufacturing the composite material according to the invention comprising the measures:
f. supplying an overlay paper or overlay non-woven fabric, the overlay paper or the overlay non-woven fabric comprising at least one binder in the B-stage state,
g. applying a textile surface structure to the overlay paper or overlay non-woven fabric, the textile surface structure comprising a printed decor, preferably a decor produced by means of a digital printing method, and optionally at least one functional material being introduced,
h. applying an overlay paper or overlay non-woven fabric to the textile surface, the overlay paper or the overlay non-woven fabric comprising at least one binder in the B-stage state,
i. laminating the structure obtained in accordance with steps f) - h) under the action of pressure and heat so that the binder present in the B-stage is consolidated,
j. optionally applying another protective layer,
k. supplying a carrier,
l. pressing the obtained structure, an adhesive and/or a reactive binder being introduced between carrier and laminate.

The laminating of the structure obtained in accordance with steps f) to h) in step i) takes place under the action of pressure and heat in such a manner that the binder present in the B stage is consolidated.

The laminating in accordance with step i) preferably takes place with short cycle presses (SC) or continuous presses.

In the SC method, overlay papers or overlay non-woven fabrics comprising a B-stage binder are also pressed to protect the decor surface. Instead of an overlay paper or overlay non-woven fabric in accordance with c), an acrylate or PU coating can also be applied to the surface.

In general, structured sheet metals with an engraving or structure-providing papers which additionally allow for a 3D structure on the substrate can be used in the production of CPLs or HPLs (e.g. in the case of multi-daylight presses). Besides this, the use of structure-providing papers is also possible in the case of continuous presses, these structure-providing papers themselves not becoming a component of the laminate.

Another object of the invention is the laminate produced by means of the CPL and HPL method, comprising the measures a) to c).

Another object of the invention is the laminate produced by means of the CPL and HPL method, comprising the measures f) to j).

The laminates thus obtained are suitable for various applications. Apart from the manufacture of decor composite materials, these laminates, when the mechanical stability is sufficient, can also be used without an additional carrier in the construction area, furniture industry or as a facade element.

Another object of the invention is also the textile surface structure comprising at least one B-stage binder in the B-stage state and being printed with a decor, preferably with a decor produced by means of digital printing. In this connection, especially additional fillers improving the print image and the visual appearance may be added to the binder (additional binder or B-stage binder) as functional materials. Examples for such fillers are titanium dioxide, chalk, CaCO₃ and colored pigments.

An important aspect in the manufacture of the composite material according to the invention and its mechanical and optical properties is the impermeability of the non-woven fabric and its corresponding air permeability, respectively. Surprisingly, it has been found that the use of textile surface structures having an air permeability of at most 2500 l/m²·sec makes particularly good results possible. Furthermore, the textile surface structure provided with a B-stage binder should have an air permeability of at most 1000 l/m²·sec, in particular of no more than 600 l/m²·sec. The air permeability is determined in accordance with DIN EN 9237.

Therefore, another object of the invention is a textile surface structure which comprises at least one binder in the B-stage and optionally contains at least one functional material which has an air permeability of at most 1000 l/m²·sec, in particular 600 l/m²·sec, as determined in accordance with DIN EN 9237, and which is provided with a decor or any other pattern preferably produced by means of digital printing. The textile surface structure has a printing quality comparable with papers.

Another object of the present invention is the use of the composite materials according to the invention comprising:
a) a carrier,
b) at least one textile surface structure applied to at least one of the two sides of the carrier and having a printed decor or pattern, in particular a decor or pattern produced by means of digital printing,
   for use, optionally after surface finishing, e.g., after lacquering or coating, as construction material, in particular for furniture, wall coverings, ceiling coverings and floor coverings.

On account of the high surface quality, the composite materials according to the invention, optionally after finishing with a protective layer, can also be directly used as construction material, in particular for furniture, wall coverings, ceiling coverings and floor coverings. This is preferably the case if the carrier already has the desired decorative appearance.

Thus, another object of the present invention is composite materials provided with a decor or pattern comprising:
a) a carrier,
b) at least one textile surface structure applied to at least one of the two sides of the carrier and comprising at least one consolidated B-stage binder and being provided with a decor or pattern, in particular produced by means of digital printing,
c) optionally at least one functional material present in the carrier and/or in the textile surface,
d) optionally overlay papers or overlay non-woven fabrics,
e) optionally further layers for the protection of the printed layer,
   **characterized in that** the textile surface structure has been printed prior to laminating with a decor or pattern, preferably by means of digital printing.

The textile surface structure in accordance with b) having a decor or pattern can also be applied by means of previously produced CPLs or HPLs.

The layers for the protection of the printed layer are usually lacquers, such as powder lacquers, clear lacquers or transparent lacquers, preferably scratch-proof lacquers or other coatings, such as, for example, polyurethane coatings applied in a hot state, that protect against mechanical influences or against UV aging.

The furniture, wall coverings, ceiling coverings and floor coverings manufactured using the composite materials according to the invention are also an object of the present invention.

Conditional upon the composite material structure according to the invention, several special functions can be made available and utilized:
- barrier layer between carrier and outer layer against H₂O and other solvents
- electrical conductivity
- improvement of the impact strength
- flame retardancy.

The use of the textile surfaces containing the B-stage binder according to the invention produces an excellent surface quality. At the same time, it is possible to produce the barrier layer properties.

When using conductive additives, the textile surface according to the invention can also be lacquered by means of a powder lacquering. It is also possible to use electrostatic lacquering methods that are otherwise not possible without additional measures.

Owing to the mechanical properties of the textile surface according to the invention, the impact strength and additionally the flame retardancy due to the omission of (decor) paper can be increased dramatically.

The invention is explained in more detail by means of the following examples but without limiting it.

### Example 1:

A non-woven fabric made of glass fibers is produced by means of the standard wet laying method. 8 µm glass fibers with a fiber length of 8 mm were used. The weight per unit area of the non-woven fabric was 50 g/m². A UF binder was used as the chemical binder, the binder proportion being ca. 24.8% by weight. The measured air permeability of this base non-woven fabric was 2350 l/m²·sec.

The base non-woven fabric thus formed was provided with a melamine/formaldehyde binder according to standard coating methods for glass non-woven fabrics on a Vits coating system. The non-woven fabric was subsequently dried to a residual moisture of 5.8%, without a complete hardening of the B-stage binder taking place. In this connection, the content of all the organic components in the non-woven fabric was approx. 75% by weight. The air permeability measured in this connection on the decoratable non-woven fabric was only 550 l/m²·sec.

After digital printing of the non-woven fabric with a pattern, the pressing took place in an SC press. The pressing process was performed for ca. 25 sec at 170°C and 35 bar.

### Example 2:

As described in example 1, a base non-woven fabric made of glass fibers was produced, with a melamine/formaldehyde B-stage binder. For the production of a CPL, several surface structures were subsequently arranged over one another and pressed by means of a standard CPL press. The pressing took place with a line speed of approx. 10 m/min and at a temperature of approx. 195°C.

In this connection, the multi-layered surface structure consisted of a lower layer made of glassine paper, a decoratable non-woven fabric produced in accordance with example 1, which only served as laminate reinforcement and was not printed, another decoratable non-woven fabric produced in accordance with example 1 printed with a pattern, as well as an overlay paper as an upper, transparent layer.

### Example 3:

A composite material consisting of the following components (from bottom to top) was produced in an SC press:
a standard counteracting paper, a wood fiberboard (MDF) as a carrier, a melamine overlay paper of 25 g/m², a printed non-woven fabric made of glass fibers and
produced in accordance with example 1, as well as a melamine overlay paper of 25 g/m² which was additionally also provided with corundum particles.

The composite material was pressed in an SC press at 185°C and 45 bar.

In all the examples depicted, excellent results were achieved with regard to the visual appearance of the decor, the surface finish and the mechanical stability.

## Claims

1. A composite material comprising:
a) a carrier,
b) at least one textile surface structure laminated onto at least one of the two sides of the carrier, the textile surface structure comprising at least one consolidated B-stage binder and optionally being provided with a functional material,
**characterized in that** the textile surface structure has been printed prior to laminating with a decor by means of digital printing and said binder present in the textile surface structure was in the B-Stage.

2. The composite material according to claim1, **characterized in that** the carrier used in accordance with a) consists of wood-based materials, paper, cork, cardboards, mineral plates, plastic carriers, fiber-reinforced materials and/or so-called honeycombs.

3. The composite material according to claim 1 or 2, **characterized in that** the textile surface structures used in accordance with b) are all structures manufactured from fibers and from which a textile surface was produced by means of a surface-forming technology.

4. The composite material according to claim 3, **characterized in that** the fiber-forming materials are natural fibers and/or fibers of synthesized or natural polymers, ceramic fibers, mineral fibers or glass fibers that can also be used in the form of mixtures.

5. The composite material according to one or more of claims 1 to 4, **characterized in that** the textile surface is a fabric, laying, knitted fabric, knitwear and/or non-woven fabric, preferably a non-woven fabric.

6. The composite material according to one or more of claims 1 to 5, **characterized in that** the textile surface structure is a textile surface of glass fibers, preferably a non-woven fabric based on glass fibers.

7. The composite material according to claim 6, **characterized in that** the weight per unit area of the textile surface structure of glass fibers is between 15 and 500 g/m², preferably 40 and 250 g/m², wherein these data refer to a surface structure without binders.

8. The composite material according to one or more of claims 1 to 7, **characterized in that** the textile surface structure has an air permeability of at most 2500 l/m²·sec.

9. The composite material according to one or more of claims 1 to 8, **characterized in that** the textile surface structure equipped with binder has an air permeability of at most 1000 l/m²·sec, preferably of less than 600 l/m²·sec.

10. A pre-product for the manufacture of a composite material according to claim 1 comprising:
a) a carrier,
b) at least one textile surface structure arranged on at least one of the two sides of the carrier, the textile surface structure comprising at least one binder in the B-stage and optionally being provided with a functional material,
c) the textile surface structure in accordance with b) being printed on the side facing away from the carrier with a decor by means of digital printing.

11. A method for the manufacture of the composite material according to claim 1 comprising the measures:
a) supplying a carrier,
b) applying a textile surface structure to at least one surface of the carrier, the textile surface structure comprising a binder in the B-stage state and being printed with a décor produced via a digital printing method, and the textile surface structure optionally comprising at least one functional material,
c) laminating the structure obtained according to step b) under the action of pressure and heat so that the binder present in the B-stage is consolidated,
d) optionally applying a protective layer.

12. The method according to Claim 11, **characterized in that** the application of a textile surface structure according to step b) also takes place during the manufacture of the carrier.

13. A method for the manufacture of the composite material according to claim 1 comprising the measures:
a. supplying a textile surface structure, the textile surface structure having a printed decor produced by means of a digital printing method, and the textile surface structure comprising at least one binder in the B-stage state and optionally at least one functional material being introduced,
b. laminating the structure obtained according to step a) under the action of pressure and heat so that the binder present in the B-stage is consolidated,
c. optionally applying a protective layer,
d. supplying a carrier,
e. pressing the obtained structure, an adhesive and/or a reactive binder having been introduced between carrier and laminate.

14. A laminate obtainable by a method comprising the measures:
a. supplying a textile surface structure, the textile surface structure having a printed décor produced by means of a digital printing method, and the textile surface structure comprising at least one binder in the B-stage state and optionally at least one functional material being introduced,
b. laminating the structure obtained according to step a) under the action of pressure and heat so that the binder present in the B-stage is consolidated,
c. optionally applying a protective layer.

15. The use of the laminate as defined in claim 14 for the manufacture of composite materials.

16. Composite materials provided with a decor or pattern, comprising:
a) a carrier,
b) at least one laminate according to claim 14 applied to at least one of the two sides of the carrier.

17. The use of the composite materials as defined in claims 1 to 9 and claim 16 as construction material, particularly in furniture, wall coverings, ceiling coverings and floor coverings.

## Patentansprüche

1. Verbundwerkstoff umfassend:
a) einen Träger,
b) mindestens ein auf mindestens einer der beiden Seiten des Trägers auflaminiertes textiles Flächengebilde, welches mindestens einen endverfestigten B-Stage Binder aufweist, und welches ggfs. mit einem Funktionsmaterial versehen sein kann,
**dadurch gekennzeichnet, dass** das textile Flächengebilde vor der Laminierung mit einem Dekor mittels Digitaldruck bedruckt wurde und der im textilen Flächengebilde vorhandene Binder im B-Stage war.

2. Verbundwerkstoff gemäß Anspruch 1, **dadurch gekennzeichnet, dass** es sich bei dem gemäß a) eingesetzten Träger um Holzwerkstoffe, Papiere, Kork, Kartonagen, mineralische Platten, Kunststoffträger, Faserverbundwerkstoffe und/oder sogenannte Honeycombs handelt.

3. Verbundwerkstoff gemäß Anspruch 1 oder 2, **dadurch gekennzeichnet, dass** es sich bei den gemäß b) eingesetzten textilen Flächengebilden um alle Gebilde, die aus Fasern hergestellt werden und aus denen mittels einer flächenbildenden Technik eine textile Fläche hergestellt worden ist, handelt.

4. Verbundwerkstoff gemäß Anspruch 3, **dadurch gekennzeichnet, dass** es sich bei den faserbildenden Materialien um Naturfasern und/oder Fasern aus synthetisierten oder natürlichen Polymeren, keramische Fasern, Mineralfasern oder Glasfasern, wobei diese auch in Form von Gemischen verwendet werden können, handelt.

5. Verbundwerkstoff gemäß einem oder mehren der Ansprüche 1 bis 4, **dadurch gekennzeichnet, dass** es sich bei der textilen Fläche um ein Gewebe, Gelege, Gestrick, Gewirke und/oder Vlies, vorzugsweise ein Vlies, handelt.

6. Verbundwerkstoff gemäß einem oder mehren der Ansprüche 1 bis 5, **dadurch gekennzeichnet, dass** es sich bei dem textilen Flächengebilde um eine textile Flächen aus Glasfasern, vorzugsweise um ein Vlies auf Basis von Glassfasern, handelt.

7. Verbundwerkstoff gemäß Anspruch 6, **dadurch gekennzeichnet, dass** das Flächengewicht des textilen Flächengebildes aus Glasfasern zwischen 15 und 500 g/m², vorzugsweise 40 und 250 g/m², wobei sich diesen Angaben auf ein Flächengebilde ohne Binder beziehen, beträgt.

8. Verbundwerkstoff gemäß einem oder mehren der Ansprüche 1 bis 7, **dadurch gekennzeichnet, dass** das textilen Flächengebilde eine Luftdurchlässigkeit von höchstens 2500 l/m² sec aufweist.

9. Verbundwerkstoff gemäß einem oder mehren der Ansprüche 1 bis 8, **dadurch gekennzeichnet, dass** das mit Binder ausgerüstete textile Flächengebilde eine Luftdurchlässigkeit von höchstens 1000 l/m² sec, bevorzugt von weniger als 600 l/m² sec aufweist.

10. Vorprodukt zur Herstellung eines Verbundwerkstoffes gemäß Anspruch 1 umfassend:
a) einen Träger,
b) mindestens ein auf mindestens einer der beiden Seiten des Trägers befindliches textiles Flächengebilde, welches mindestens einen Binder im B-Stage aufweist, und welches ggfs. mit einem Funktionsmaterial versehen sein kann,
c) das textile Flächengebilde gemäß b) auf der dem Träger abgewandten Seite mit einem Dekor mittels Digitaldrucks bedruckt ist.

11. Verfahren zur Herstellung des Verbundwerkstoffes gemäß Anspruch 1 umfassend die Maßnahmen:
a) Zuführen eines Trägers,
b) Aufbringen eines textilen Flächengebildes auf mindestens einer Oberfläche des Trägers, wobei das textile Flächengebilde mindestens einen Binder im B-Stage-Zustand aufweist und mit einem durch Digitaldruckverfahren erzeugten Dekor, bedruckt ist, und wobei das textile Flächengebilde gegebenenfalls mindestens ein Funktionsmaterial aufweist,
c) Laminieren des gemäß Schritt c) erhaltenen Aufbaus unter Einwirkung von Druck und Wärme, so dass der im B-Stage vorliegenden Binder endverfestigt wird,
d) ggf. Aufbringen einer Schutzschicht.

12. Verfahren gemäß Anspruch 11, **dadurch gekennzeichnet, dass** das Aufbringen eines textilen Flächengebildes gemäß Schritt b) auch während der Herstellung des Trägers erfolgt.

13. Verfahren zur Herstellung des Verbundwerkstoffes gemäß Anspruch 1 umfassend die Maßnahmen:
a. Zuführen eines textilen Flächengebildes, wobei das textile Flächengebilde ein aufgedrucktes Dekor aufweist, das mittels Digitaldruckverfahrens erzeugt ist, und das textile Flächengebilde mindestens einen Binder im B-Stage-Zustand aufweist und gegebenenfalls mindestens ein Funktionsmaterial eingebracht ist
b. Laminieren des gemäß Schritt a) erhaltenen Aufbaus unter Einwirkung von Druck und Wärme, so dass der im B-Stage vorliegenden Binder endverfestigt wird,
c. ggf. Aufbringen einer Schutzschicht,
d. Zuführen eines Trägers,
e. Verpressen des erhaltenen Gebildes, wobei ein Klebstoff und / oder ein reaktives Bindemittel zwischen Träger und Laminat eingebracht wurde.

14. Laminat erhältlich durch ein Verfahren umfassend die Maßnahmen:
a. Zuführen eines textilen Flächengebildes, wobei das textile Flächengebilde ein aufgedrucktes Dekor aufweist, das mittels Digitaldruckverfahrens erzeugt ist, und das textile Flächengebilde mindestens einen Binder im B-Stage-Zustand aufweist und gegebenenfalls mindestens ein Funktionsmaterial eingebracht ist
b. Laminieren des gemäß Schritt a) erhaltenen Aufbaus unter Einwirkung von Druck und Wärme, so dass der im B-Stage vorliegenden Binder endverfestigt wird,
c. ggf. Aufbringen einer Schutzschicht.

15. Verwendung des in Anspruch 14 definierten Laminates zur Herstellung von Verbundwerkstoffen.

16. Verbundwerkstoffe, die mit einem Dekor oder Muster versehen sind, umfassend:
a) einen Träger,
b) mindestens ein auf mindestens einer der beiden Seiten des Trägers aufgebrachtes Laminat gemäß Anspruch 14.

17. Verwendung der in den Ansprüchen 1 bis 9 sowie Anspruch 16 definierten Verbundwerkstoffe als Konstruktionsmaterial, insbesondere bei Möbeln, Wand-, Decken- und Bodenbelägen.

## Revendications

1. Matériau composite comprenant:
a) un support,
b) au moins une structure textile de surface stratifiée sur au moins l'un des deux côtés du support, la structure textile de surface comprenant au moins un liant d'état-B consolidé et étant optionnellement pourvue avec un matériau fonctionnel,
**caractérisé en ce que** la structure textile de surface est imprimée avant la stratification avec un décor par moyen d'une impression digitale et ledit liant présent dans la structure textile de surface est dans l'état-B.

2. Matériau composite selon la revendication 1, **caractérisé en ce que** le support utilisé en accord avec a) est formé de matériaux à base de bois, papier, liège, cartons, plaques minérales, supports en plastique, matériaux renforcés à fibre et/ou lesdits rayons de miel.

3. Matériau composite selon la revendication 1 ou 2, **caractérisé en ce que** les structures textiles de surface utilisées en accord avec b) sont toutes les structures produites de fibres et desquelles une surface textile est produite par moyen d'une technologie de formation de surface.

4. Matériau composite selon la revendication 3, **caractérisé en ce que** les fibres formant les matériaux sont des fibres naturelles et/ou des fibres de polymères synthétisés ou naturels, des fibres céramiques, des fibres minérales ou des fibres de verre qui peuvent aussi être utilisées dans la forme de mélanges.

5. Matériau composite selon l'une ou plusieurs des revendications 1 à 4, **caractérisé en ce que** la surface textile est un tissu, une tresse, un tissu tricoté, tricot et/ou produit non tissé, préférablement un produit non tissé.

6. Matériau composite selon l'une ou plusieurs des revendications 1 à 5, **caractérisé en ce que** la structure textile de surface est une surface textile de fibres de verre, préférablement un produit non tissé de fibres de verre.

7. Matériau composite selon la revendication 6, **caractérisé en ce que** le poids par unité de surface de la structure textile de surface de fibres de verre est entre 15 et 500 g/m², préférablement 40 et 250 g/m², où ces données font référence à une structure de surface sans liants.

8. Matériau composite selon l'une ou plusieurs des revendications 1 à 7, **caractérisé en ce que** la structure textile de surface présente une perméabilité de l'air d'au moins 2500 l/m²·sec.

9. Matériau composite selon l'une ou plusieurs des revendications 1 à 8, **caractérisé en ce que** la structure textile de surface pourvue avec liant présente une perméabilité de l'air d'au moins 1000 l/m²·sec., préférablement de moins de 600 l/m²·sec.

10. Pré-produit pour la production d'un matériau composite selon la revendication 1 comprenant:
a) un support,
b) au moins une structure textile de surface arrangée sur au moins l'un des deux côtés du support, la structure textile de surface comprenant au moins un liant dans l'état-B consolidé et étant optionnellement pourvue avec un matériau fonctionnel,
c) la structure textile de surface en accord avec b) étant imprimée sur la face latérale à partir du support avec un décor par moyen d'une impression digitale.

11. Procédé de production du matériau composite selon la revendication 1 comprenant les mesures:
a) fournir un support,
b) appliquer une structure textile de surface sur au moins une surface du support, la structure textile de surface comprenant un liant dans l'état-B et étant imprimée avec un décor produit par moyen d'un procédé d'impression digitale, et la structure textile de surface comprenant optionnellement au moins un matériau fonctionnel,
c) stratifier la structure obtenue en accord avec l'étape c) sous l'action de la pression et de la chaleur de sorte que le liant présent dans l'état-B soit consolidé,
d) appliquer optionnellement une couche de protection.

12. Procédé selon la revendication 11, **caractérisé en ce que** l'application d'une structure textile de surface en accord avec l'étape b) a lieu aussi pendant la production du support.

13. Procédé de production du matériau composite selon la revendication 1 comprenant les mesures:
a. fournir une structure textile de surface, la structure textile de surface ayant un décor imprimé produit par moyen d'un procédé d'impression digitale, et la structure textile de surface comprenant au moins un liant dans l'état-B et optionnellement au moins un matériau fonctionnel étant introduit,
b. stratifier la structure obtenue en accord avec l'étape a) sous l'action de la pression et de la chaleur de sorte que le liant présent dans l'état -B soit consolidé,
c. appliquer optionnellement une couche de protection,
d. fournir un support,
e. presser la structure obtenue, un adhésif et/ou un liant réactif étant introduit entre le support et le stratifié.

14. Stratifié obtenu par un procédé comprenant les mesures:
a. fournir une structure textile de surface, la structure textile de surface ayant un décor imprimé produit par moyen d'un procédé d'impression digitale, et la structure textile de surface comprenant au moins un liant dans l'état-B et optionnellement au moins un matériau fonctionnel étant introduit,
b. stratifier la structure obtenue en accord avec l'étape a) sous l'action de la pression et de la chaleur de sorte que le liant présent dans l'état-B soit consolidé,
c. appliquer optionnellement une couche de protection.

15. Utilisation du stratifié tel que défini dans la revendication 14 pour la production de matériaux composites.

16. Matériaux composites pourvus avec un décor ou motif, comprenant:
a) un support,
b) au moins un stratifiée selon la revendication 14 appliqué sur au moins l'un des deux côtés du support.

17. Utilisation des matériaux composites tels que définis dans les revendications 1 à 9 et la revendication 16 comme matériau de construction, particulièrement en mobilier, revêtements muraux, revêtements de plafond et revêtements de sol.
